Europäisches Patentamt

European Patent Office

Office européen des brevets

(19)

(11) Veröffentlichungsnummer: **0 201 923**
**B1**

(12) **EUROPÄISCHE PATENTSCHRIFT**

(45) Veröffentlichungstag der Patentschrift: **02.01.91**

(21) Anmeldenummer: **86106571.2**

(22) Anmeldetag: **14.05.86**

(51) Int. Cl.⁵: **B 05 D 1/04, B 05 D 5/08, G 03 G 13/08, B 21 D 37/18**

(54) **Verfahren zum Beschichten fester Körper mit Schmiermitteln.**

(30) Priorität: **15.05.85 DE 3517553**

(43) Veröffentlichungstag der Anmeldung:
**20.11.86 Patentblatt 86/47**

(45) Bekanntmachung des Hinweises auf die
Patenterteilung:
**02.01.91 Patentblatt 91/01**

(84) Benannte Vertragsstaaten:
**AT BE CH DE FR GB IT LI LU NL SE**

(56) Entgegenhaltungen:
**DE-A-2 433 006**
**DE-A-2 732 009**
**DE-A-2 804 633**
**DE-A-2 841 400**
**US-A-2 297 691**

(73) Patentinhaber: **Lichtenberg & Co Chemische Fabrik Zweigniederlassung der UK-Mineralölwerke Wenzel & Weidmann GmbH, Eschweiler**
**Hellerstrasse 50**
**D-4600 Dortmund 50 (DE)**

(72) Erfinder: **Link, Helmut, Dr.**
**Am Spörkel 78**
**D-4600 Dortmund 50 (DE)**
Erfinder: **Enz, H.-Peter**
**Rotkehlchenweg 1b**
**D-4600 Dortmund 50 (DE)**

Courier Press, Leamington Spa, England.

**Beschreibung**

Die vorliegende Erfindung betrifft ein Verfahren zum mengen-mäßig und örtlich selektiven Beschichten fester Körper mit Schmierstoffen durch Anwendung elektrostatischer Verfahren.

Das Beschichten durch elektrostatische Verfahren ist bekannt. Es sind zahlreiche Verfahren beschrieben worden, nach denen Farb-, Lack-, Kunststoff- und andere Beschichtungen mittels elektrostatischer Felder aufgebracht werden können.

So wird in DE-OS 28 04 633 eine Vorrichtung zum elektrostatischen Aufbringen einer flüssigen Farbe beschrieben, wobei Schaum- und Bläschenbildung in der aufgebrachten Farbschicht vermieden werden sollen.

In DE-OS 28 41 400 wird ein Verfahren beschrieben, um eine Kunststoffbeschichtung im elektrostatischen Feld in dünner gleichmäßiger Schicht auf einem Körper aufzubringen. Hierzu wird ein auf einem Träger befindlicher geschmolzener Kunststoff an einem zu beschichtenden Körper im elektrostatischen Feld vorbeigeführt, wobei sich der flüssige Kunststoff auf dem Körper ablagert.

Auch das elektrostatische Aufbringen flüssiger, organischer Schmierstoffe ist bereits beschrieben worden.

So kann man nach der Offenbarung der DE-OS 24 33 006, die dem Oberbegriff des Hauptanspruchs der vorliegenden Erfindung zugrunde liegt, einen elektrisch aufgeladenen Flüssigkeitsnebel eines Schmierstoffs in einer elektrostatischen Kammer auf einem Blech, einem Metallband oder einer Metallplatte abscheiden. Bei diesem Verfahren ist zwar eine mengenmässige Dosierung in gewissem Umfang möglich, jedoch wird die gesamte in der Kammer befindliche Metallfläche von dem angewendeten Schmiermittel bedeckt.

In DE-OS 27 32 009 wird ein Verfahren beschrieben, um für Verpackungszwecke Feinstblech mit einer physiologisch unbedenklichen, dünnen, schützenden Schicht zu bedecken. Hierbei wird das Blech in Bandform bei einer bestimmten Bandgeschwindigkeit elektrostatisch beschichtet. Auch bei diesem Verfahren erfolgt die Beschichtung der gesamten Bandfläche.

Über den geschilderten Stand der Technik hinaus besteht in zahlreichen Technologien, in denen eine Schmierung der zu verarbeitenden festen Körper erforderlich ist, ein Bedürfnis des Fachmanns, nicht nur Oberflächenbeschichtungen in fein verteilter, gleichmäßiger Schicht, sondern eine solche Beschichtung auch örtlich begrenzt vornehmen zu können, nämlich nur an den Stellen, an denen die Schmierung tatsächlich erforderlich ist. Nach dem Stand der Technik verwendet man zum örtlich begrenzten Aufbringen von Schmiermitteln übliche nicht elektrostatisch arbeitende Schmiermittelpistolen, welche an bestimmten Stellen zu bestimmten Zeitpunkten eine nicht genau dosierbare Schmiermittelmenge auf den zu schmierenden Körper abgeben. Das Schmiermittel wird hierbei punktförmig aufgebracht oder auf einen in der Größe nicht eakt eingrenzbaren Bereich aufgesprüht. Mit diesen Maßnahmen sind erhebliche Mängel verbunden, wie z.B. das Vorliegen des Schmiermittels in Bereichen, auf denen dieses unerwünscht oder von Nachteil ist, wobei gegebenenfalls das Schmiermittel von diesen Stellen vor der Weiterverarbeitung durch Reinigen mit Lösungsmitteln wieder entfernt werden muß. Nachteilig ist ferner ein zu großer Verbrauch an Schmiermitteln, die Emission des Schmiermittels in den Arbeitsraum, verbunden mit entsprechender Umweltbelastung, oder Verschmierungen und Verharzungen des nicht entfernbaren überschüssigen Schmiermittels, welche die Weiterverarbeitung der zu schmierenden Körper erschweren.

Die geschilderten Schwierigkeiten treten insbesondere in technischen Bereichen auf, in denen Schmiermittel als Ziehmittel z.B. beim Tief- und Streckziehen oder als Umformschmierstoffe, z.B. beim Schmieden, Kaltfließpressen, Drahtziehen und Rohrwalzen eingesetzt werden.

Figur 1 stellt als Beispiel einen zu schmierenden Tiefziehvorgang dar.

Figur 2 stellt ein Beispiel einer erfindungsgemäßen örtlich und zeitlich begrenzten Schmierung eines ebenen Bleches dar.

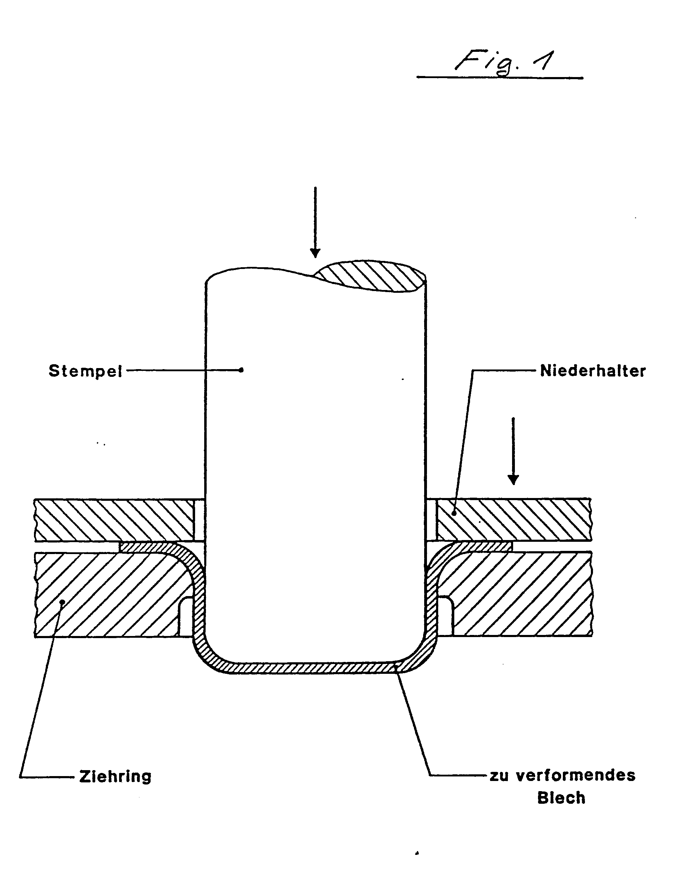

In Figur 1 ist erläutert, wo räumlich begrenzt eine sehr gute Schmierung und wo kein Schmiermittel vorliegen soll. So ist im Bereich von Ziehringinnenseite und Blech eine gute Schmierung zur Verformung des Bleches erforderlich, während eine solche im Bereich des Stempelbodens unerwünscht ist. Natürlich wird auch keine Schmierung im Bereich außerhalb der zu verformenden Stellen benötigt. Das Tiefziehen spielt eine bedeutende Rolle beispielsweise im Karosseriebau. Es ist Stand der Technik, daß tiefgezogene und streckgezogene Karosserieteile ohne zwischengeschaltete Reinigung direkt zu Rohkarosserie zusammengebaut werden. Der Zusammenbau erfolgt sowohl durch Schweißen als auch Kleben. Für beide Verarbeitungen sind Reste von Ziehfetten von großem Nachteil. An Ziehfette wird daher unter anderem die Forderung der Verträglichkeit mit dem Kleber gestellt. Diese Forderung ist jedoch bei der Vielzahl vorhandener Kleber häufig schwer zu erfüllen. Verbleibendes überschüssiges Schm-iermittel führt zu einem weiteren Nachteil, nämlich zur Auflösung von Ziehmittel im Lackbad, das zur Lackierung der Karosserie dient. Dies hat eine nicht einwandfreie Lackierung zur Folge.

Figur 1 macht deutlich, daß ein großes Bedürfnis für ein Lösung der Aufgabenstellung besteht, Schmierstoffe nicht nur in der erforderlichen dünnen Schicht und gleichmäßigen Verteilung, sondern auch in der erforderlichen räumlichen Begrenzung auf feste, weiter zu verarbeitende Körper aufzubringen. Obgleich gerade in der metallverarbeitenden Industrie, insbesondere im Autobau weltweit in riesigem Umfang Verformungen mit Hilfe von Ziehmitteln vorgenommen werden, steht zu Zeit noch keine befriedigende Lösung der genannten Aufgabe zu Verfügung.

Auf einem eiteren Gebiet ist die oben genannte Aufgabe ebenfalls nicht zufriedenstellend gelöst, nämlich im Bereich von in heißem Zustand um oder zu verformenden Gegenständen. Auch bei Verformungsvorgängen im Temperaturbereich von über 1000°C werden Schmiermittel eingesetzt, wie z.B. Graphit, gewisse Pigmente, Talkum, Kreide, Molybdänsulfid, Borsäure, Kalk, Glaspulver u.a. die ggfs. in Pulverform oder als Suspension in verschiedenen Trägerflüssigkeiten vorliegen können. Diese Mittel dienen sowohl als Schmier- als auch als Trennmittel und werden nach dem Stand der Technik auf die zu verformende Stelle und deren Umgebung — wie bereits oben beschrieben — aufgesprüht. Durch die hohe Temperatur wird ein Teil des Umformschmierstoffs verdampft und gelangt in den Arbeitsraum als Emission. Auch hier besteht ein Bedürfnis nach einem Verfahren, das die Nachteile des Standes der Technik ausschaltet.

Gemäß vorliegender Erfindung wird nunmehr ein Verfahren zur Verfügung gestellt, daß eine befriedigende Lösung der geschilderten Aufgabe darstellt, nämlich ein Verfahren zum mengenmäßig und örtlich selektiven Aufbringen von Schmiermitteln auf feste Körper, gemäss dem man das Schmiermittel in flüssiger, zerstäubter Form oder fester, pulverförmiger Form unter Verwendung eines elektrostatischen Feldes auf den festen Körper aufbringt, dadurch gekennzeichnet, dass die mit dem Schmiermittel zu behandelnden Stellen des festen Körpers zeitlich und örtlich begrenzt, einem elektrostatischen Feld und/oder einer Änderung eines elektrostatischen Feldes ausgesetzt werden.

Im Rahmen der vorliegenden Erfindung kann das Schmiermittel mit an sich bekannten elektrostatisch arbeitenden Vorrichtungen aufgebracht werden. So kann eine Spritzvorrichtung eingesetzt werden, in der das aufzubringende feste oder flüssige Schmiermittel elektrisch aufgeladen wird und auf einen Körper aufgebracht wird auf dem örtlich und zeitlich begrenzt eine entgegengesetzte Ladung hervorgebracht wird, so daß nur im Bereich der Ladung das Schmiermittel festgehalten wird.

Nach dem Einsatz eines räumlich begrenzten elektrischen Feldes kann erfindungsgemäß unmittelbar nach dem Aufbringen des Schmiermittels überschüssiges Schmiermittel von der Aufgabevorrichtung abgesaugt und der Wiederverwendung zugeführt werden. Nach Durchlaufen der Aufbringvorrichtung kann nunmehr der Körper der Weiterverarbeitung zugeführt werden, z.B. dem Tief- und Streckziehen, wobei nunmehr nur an den Stellen Schmiermittel vorhanden ist, an denen es benötigt wird. Durch die angewendete Dosierung läßt sich an den gewünschten Stellen eine gleichmäßige Schmiermittelbeschichtung aufbringen in der gewünschten Dicke.

Auch im Falle der heißen Verformung kann erfindungsgemäß ebenfalls durch Anlegen eines elektrostatischen Feldes in der erforderlichen Stärke, räumlich und mengenmäßig begrenzt, unter weitgehender Vermeidung von Emissionen die gewünschte Beschichtung vorgenommen werden.

Elektrostatische Aufgabevorrichtungen können sich auch an mehreren Stellen bzw. Seiten des Körpers befinden, der mit Schmiermittel zu behandeln ist. Wesentlich ist, daß die mit dem Schmiermittel zu behandelnden Stellen des Körpers, örtlich und zeitlich begrenzt, einem elektrischen Feld und/oder einer Änderung eines elektrostatischen Feldes ausgesetzt werden. Auch ein Verfahren, wie es in der DE-OS 28 41 400 beschrieben ist, kann beispielsweise unter den genannten Vorraussetzungen erfindungsgemäß angewandt werden. Örtlich begrenzte Beschichtungen können jedoch auch durch Vorschalten von Blenden vorgenommen werden.

Die geschilderten Verfahren sind beispielhaft, jedoch nicht als einschränkend anzusehen.

Als zu beschichtende Körper seien beispielhaft, jedoch nicht einschränkend genannt:

Bleche, Platten, wobei diese beispielsweise in Form von Folien und Bändern, jedoch auch in vorgestanzter Form vorliegen können, Karosserieteile, Drähte, Blöcke, sonstige Körper, Behälter, Rohre, Töpfe, Bestecke u.a. Die Körper können aus Metallen angefertigt sein, jedoch auch beispielsweise aus Kunststoffen.

Bei den Schmierstoffen handelt es sich erfindungsgemäß im allgemeinen um feste Schmierstoffe, wie. z.B. Paraffine, ferner Wachse, wie z.B. Ester-, Amid-, Etherwachs, Montanwachs u.a., Chlorparaffine, höher siedende organische Säuren, Alkohole, Ketone u.a., ferner Polyisobutene, Silicone, tierische u. pflanzliche Fette, synthetische Fette u.a., ferner organische oder anorganische Pigmente, Borsäure, Kalk, Talkum, Kreide, organische und anorganische polymere, Molybdänsulfid, Graphit, Glas u.a., wobei diese Feststoffe bevorzugt als Pulver angewendet werden. Die Feststoffe können jedoch auch z.B. in Form von Suspensionen angewendet werden. Ferner können die Schmiermittel Zusätze enthalten, wie z.B. Korrosionsschutzmittel, Inhibitoren u.a.

Die Schmierstoffe können jedoch auch in Mikrokapseln eingeschlossene flüssige Schmierstoffe sein.

Die Schmierstoffe können jedoch auch flüssig sein, und beispielsweise aus Konlenwasserstoffen bestehen, ferner aus Siliconölen, tierischen und pflanzlichen Ölen, synthetischen Ölen, Flüssigwachsen u.a.

Die genannten Schmiermittel sind beispielhaft, jedoch nicht limitierend anzusehen.

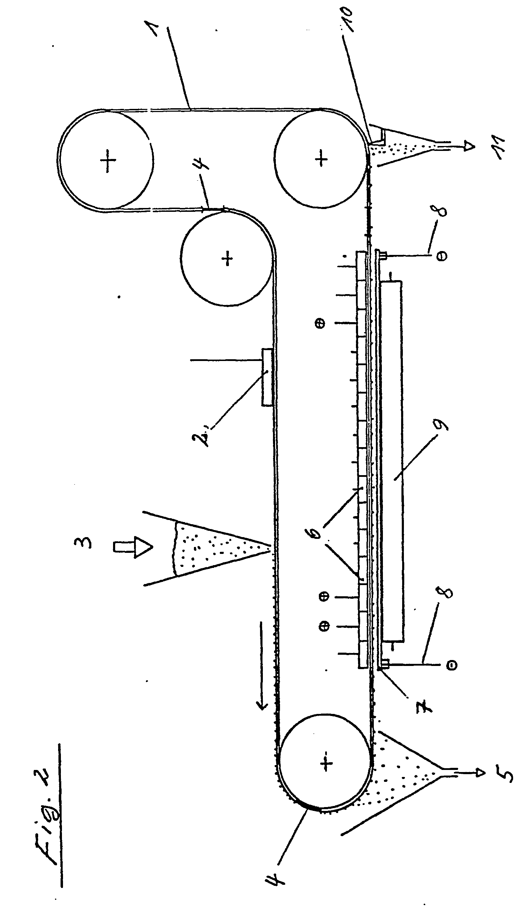

Mit Hilfe der Figur 2 soll beispielhaft das erfindungsgemäße Verfahren näher erläutert werden.

Ein Trägerband (1) aus elektrostatisch gut aufladbarem Kunststoff, beispielsweise einer Folie oder einem Gewebe, wird bei Vorrichtung (2) elektrostatisch aufgeladen. Anschließend wird bei (3) pulverförmiges oder granulatförmiges Schmiermittel aufgegeben.

Überschüssiges Schmiermittel fällt an der ersten Umlenkrolle des Trägerbandes ab und wird über Auffang und Rückfördereinheit (5) zurückgewonnen.

Es verbleibt eine der Aufladung des Trägerbandes entsprechend starke Materialschicht auf dem Trägerband. Dieses kann durch Trennstücke (4) in Segmente unterteilt werden, um Zonen unterschiedlicher Ladung zu erzeugen und diese voneinander zu trennen.

Senkrecht zur Bewegungsrichtung des Trägerbandes bewegt sich ein mit Schmiermittel örtlich und mengenmäßig selektiv zu beschichtendes Blech (7). Oberhalb des Trägerbandes befinden sich Entladungselemente (6). Das Blech ist durch Gegenpolbrüsten (8) als Gegenpol geschaltet. Durch entsprechende Umpolung der einzelnen Entladungselemente kann örtlich selektiv ein elektrostatisches Feld erzeugt oder geändert werden, das dazu führt, daß an diesen Stellen Schmiermittel von dem Trägerband auf das Blech gelangt.

Überschüssiges Pulver kann an Vorrichtung (11) abgestreift werden. (9) stellt eine Blechtransporteinheit dar.

Im allgemeinen kommt das Blech während des Aufbringtaktes zum Stillstand. Es können sich jedoch sowohl das Trägerband als auch das Blech grundsätzlich während des Aufbringens bewegen, wobei die Steuerung der Entladungselemente (6) entsprechend angepasst sein muß.

Die Stillstandtakte liegen im allgemeinen zwischen 0,1 bis 30 sec., vorzugsweise zwischen 0,5 bis 10 sec.

Das elektrostatische Feld kann erfindungsgemäß sowohl durch Gleichstrom als auch durch Wechselstrom erzeugt werden. Die anzulegende Spannung muß entsprechend dem Abstand zwischen Trägerband und Blech, aufzubringender Schmiermittelmenge und Art des Trägerbandmaterials variiert werden. Trägerbandgeschwindigkeit und Schichtdicke auf dem Trägerband sind dem Bedarf an Schmiermittel-Schichtdicke auf dem zu beschichtenden Blech anzupassen.

Beispielhaft wurde bei einer Blechbeschichtung eine Spannung von 4000 Volt eingestellt, bei einem Abstand zwischen Blech und Trägerband von 1mm.

Durch entsprechende Spannvorrichtungen und Führungshilfen können auch gewölbte Bleche oder Körper, mit Schmiermittel örtlich und mengenmäßig selektiv beschichtet werden.

Ein weiteres Ausführungsbeispiel ist die Beschichtung mit Sprühelektrodenelementen anstelle der in Figur 2 dargestellten Kondensatorplatten.

Auch elektrostatisch arbeitende Spritzpistolen oder bestimmte Raster können anstelle des in Figur 2 dargestellen Trägerbandes erfindungsgemäß eingesetzt werden.

Durch das erfindungsgemäße Verfahren können erstmals im Schmiermittelbereich, insbesondere im Kalt- und Heißverformungsbereich die geschilderten Mängel des Standes der Technik überwunden werden.

## Patentansprüche

1. Verfahren zum Aufbringen von Schmiermitteln auf feste Körper, gemäss dem man das Schmiermittel in flüssiger, zerstäubter Form oder fester, pulverförmiger Form unter Verwendung eines elektrostatischen Feldes auf den festen Körper aufbringt, dadurch gekennzeichnet, dass die mit dem Schmiermittel zu behandelnden Stellen des festen Körpers zeitlich und örtlich begrenzt, einem elektrostatischen Feld und/oder einer Änderung eines elektrostatischen Feldes ausgesetzt werden.

2. Verfahren nach Anspruch 1, dadurch gekennzeichnet, daß als Schmiermittel Ziehschmiermittel vorzugsweise in feiner Verteilung eingesetzt werden.

3. Verfahren nach Anspruch 1, dadurch gekennzeichnet, daß als Schmiermittel Umformschmierstoffe vorzugsweise in feiner Verteilung eingesetzt werden.

4. Verfahren nach den Ansprüchen 1-3, dadurch gekennzeichnet, daß die Vorrichtung zum Aufbringen der Schmiermittel aus einem oder mehreren elektrostatisch arbeitenden Spritzgeräten besteht.

5. Verfahren nach den Ansprüchen 1-3, dadurch gekennzeichnet, daß unmittelbar nach dem Aufbringen des Schmiermittels überschüssiges Schmiermittel von der Aufbringvorrichtung entfernt wird.

6. Verfahren nach den Ansprüchen 1-5, dadurch gekennzeichnet, daß die Anwendung desselben bei der Blechumformung und Massivumformung von Metallen und Kunstoffen erfolgt.

## Revendications

1. Procédé pour répandre des lubrifiants sur des corps solides, ce procédé étant du type dans lequel on répand le lubrifiant sur le corps solide dans un état liquide et atomisé ou dans un état solide et pulvérisé sous l'application d'un champ électrostatique, caractérisé en ce que les endroits à traiter avec le lubrifiant sont exposés à un champ électrostatique et/ou à un champ électrostatique changeant à une manière limitée relative à l'endroit et à la période de temps.

2. Procédé selon la revendication 1, caractérisé en ce que des lubrifiants d'emboutissage sont appliqués, de préférence dans un état finement divisé.

3. Procédé selon la revendication 1, caractérisé en ce que des lubrifiants pour moules sont appliqués dans un état finement divisé.

4. Procédé selon les revendications 1-3, caractérisé en ce que le dispositif pour répandre des lubrifiants, consist en un ou plusieurs pistolets-pulvérisateur opérants électrostatiques.

5. procédé selon les revendications 1-4, caractérisé en ce que après répandre des lubrifiants, du lubrifiant excédentaire est écarté du dispositif pour répandre des lubrifiants.

6. Procédé selo les revendications 1-5, caractérisé en ce que son application est effectué à la déformation des tôles et à la transformation massive des mètaux et des matières plastiques.

## Claims

1. Process for coating solid bodies with lubricants, according to which the lubricant is applied to the solid body either in a liquid, atomized or solid, pulverized state by using an electrostatic field, characterized in that the areas of the solid body to be treated with the lubricant are exposed to an electrostatic field and/or a changing electrostatic field in such a way that the exposure is limited with regard to the extent of the area and to the period of time.

2. Process according to claim 1, characterized in that a draw lubricant is used, preferably in a finely divided state.

3. Process according to claim 1, characterized in that a molding lubricant is used, preferably in a finely divided state.

4. Process according to claims 1-3, characterized in that the coating device consists of one or several spray guns operating electrostatically.

5. Process according to claims 1-4, characterized in that after coating with lubricant, excess lubricant is removed from the coating device.

6. Process according to claims 1-5, characterized in that it's application is effected during the re-formation of sheet metal and during the solid state re-formation of metals and plasties.

<u>Fig. 1</u>

Stempel ————

Niederhalter

Ziehring

zu verformendes Blech

Fig. 2

EP 0 201 923 B1